# EUROPÄISCHE PATENTSCHRIFT

(11) **EP 2 707 174 B1**
(45) Veröffentlichungstag und Bekanntmachung des Hinweises auf die Patenterteilung: **19.08.2015**
(21) Anmeldenummer: 12719715.0
(22) Anmeldetag: 08.05.2012
(51) Int. Cl.: B23K 26/26, B23K 33/00

(54) **VERFAHREN ZUM VERSCHWEISSEN VON GEGENSTÄNDEN MIT EINER BESONDEREN KANTENGEOMETRIE**
METHOD FOR WELDING OBJECTS WITH A PARTICULAR EDGE GEOMETRY
PROCÉDÉ DE SOUDAGE D'OBJETS PRÉSENTANT UNE GÉOMÉTRIE DES BORDS PARTICULIÈRE

(30) Priorität: 10.05.2011 DE 102011101043
(43) Veröffentlichungstag der Anmeldung: 19.03.2014
(73) Patentinhaber: Protektorwerk Florenz Maisch GmbH & Co. KG, 76571 Gaggenau (DE)
(72) Erfinder: WILLERSCHEID, Heiner, 77886 Lauf (DE)
(74) Vertreter: Manitz, Finsterwald & Partner GbR
(86) Internationale Anmeldenummer: PCT/EP2012/058449
(87) Internationale Veröffentlichungsnummer: WO 2012/152790

(56) Entgegenhaltungen:
- EP-A1- 0 288 884
- WO-A1-99/62669
- DE-A1- 19 603 894
- US-A- 1 773 068
- US-A- 5 283 415
- US-A- 6 060 682

## Beschreibung

Die vorliegende Erfindung betrifft ein Verfahren zum Verschweißen von Gegenständen, insbesondere von Metallplatten, -blechen oder -profilen, gemäß dem Oberbegriff des Anspruchs 1 (siehe, z.B., EP 0 288 884 A).

Die beim Laserstrahlschweißen verwendeten Laserstrahlen besitzen üblicherweise einen sehr geringen Durchmesser von einigen Zehntel Millimetern, wodurch sehr hohe Energiekonzentrationen an der Schweißstelle entstehen und gleichzeitig gegenüber herkömmlichen Schweißverfahren sehr schmale Schweißnahtformen erzeugt werden können. Problematisch ist dabei jedoch, dass die zum Verschweißen aneinander gelegten Kanten nahtlos, d.h. ohne Zwischenraum, aneinander gelegt werden müssen, da aufgrund des geringen Durchmessers des Laserstrahls dieser durch einen vorhandenen Spalt zwischen den Kanten hindurchtreten könnte, ohne dabei das zu verbindende Kantenmaterial anzuschmelzen. Insbesondere wenn die Kanten nicht vollständig glatt ausgebildet sind, sondern beispielsweise aufgrund eines Schneid- oder Stanzverfahrens eine raue Oberfläche besitzen, müssen daher bei üblichen Laserstrahlschweißverfahren die Kanten der Gegenstände unter Druck aneinander gelegt werden, damit eine Spaltbildung zwischen den Kanten beim Verschweißen verhindert wird. Die entsprechende Führung der zu verschweißenden Gegenstände ist aufwändig, insbesondere wenn die Gegenstände im Onlineverfahren mit hohen Geschwindigkeiten transportiert werden.

Es ist eine Aufgabe der vorliegenden Erfindung, ein Verfahren der eingangs genannten Art anzugeben, bei dem die Verbindungskanten auch ohne aufwändige Führungen oder Ausrichteinheiten zuverlässig miteinander verschweißt werden können.

Ausgehend von einem Verfahren der eingangs genannten Art wird diese Aufgabe erfindungsgemäß durch die Merkmale und/oder schritte des gekennzeichnenden Teil des Anspruchs 1 gelöst. Durch die erfindungsgemäße Ausbildung einer Kantengeometrie mit hinterschnittenen Verbindungskanten ist gewährleistet, dass der Laserstrahl beim Verschweißen nicht durch einen Spalt zwischen den zu verschweißenden Gegenständen hindurchtreten kann, ohne Kantenmaterial aufzuschmelzen. Durch die Hinterschneidungen trifft der Laserstrahl zuverlässig auf zu verschmelzendes Kantenmaterial, das nach dem Aufschmelzen eine sichere Verbindung der beiden Kanten gewährleistet.

Die Hinterschneidungen können dabei entweder in Richtung des Laserstrahls liegen, so dass in Richtung des Laserstrahls gesehen zunächst ein Bereich der einen Kante und, von dieser überlappt, darunter ein Bereich der zweiten Kante angeordnet ist, die durch den Laserstrahl nacheinander aufgeschmolzen und miteinander verbunden werden. Es ist auch möglich, dass die Hinterschneidungen in Bewegungsrichtung des Laserstrahls hintereinander liegen. Mit dem Begriff Bewegungsrichtung des Laserstrahls ist dabei eine Relativbewegung des Laserstrahls gegenüber den Kanten der zu verschweißenden Gegenstände gemeint, d.h. dass sich entweder der Laserstrahl gegenüber den Kanten oder die Kanten gegenüber dem Laserstrahl durch entsprechende Bewegung der Gegenstände bewegen kann.

Auch eine Bewegung sowohl des Laserstrahls als auch der Gegenstände ist möglich. Bei dieser Variante können zwar in Richtung des Laserstrahls aufgrund von Ungleichmäßigkeiten an den Kantenflächen Abstände vorhanden sein, aufgrund der in Bewegungsrichtung vorhandenen Hinterschneidungen wird jedoch auch in diesem Fall verhindert, dass der Laserstrahl über größere Strecken durch diese Spalte hindurchgeführt wird, ohne Kantenmaterial aufzuschmelzen.

Nach einer vorteilhaften Ausführungsform der Erfindung wird die Größe der Hinterschneidungen so gewählt, dass beim Schweißvorgang das Material der aneinander liegenden Kanten im Wesentlichen über den gesamten aneinander liegenden Bereich zumindest angeschmolzen oder vollständig geschmolzen wird. Insbesondere ist die Größe der Hinterschneidungen somit so gewählt, dass sich der von dem Laserstrahl geschmolzene Materialbereich im Wesentlichen vollständig über die Fläche der Hinterschneidungen erstreckt.

Vorteilhaft werden die Kanten ohne wesentlichen Druck aneinander gelegt. Zwar ist auch das Aneinanderlegen der Kanten mit Druck möglich, ein solcher Druck wird aufgrund des erfindungsgemäßen Verfahrens jedoch nicht benötigt, so dass die Kanten sogar drucklos aneinander gelegt werden können. Auf diese Weise sind keine aufwendige Führung oder das Vorsehen von Anpresselementen notwendig.

Nach einer weiteren vorteilhaften Ausführungsform der Erfindung werden die Hinterschneidungen erzeugt, indem die Kanten zumindest bereichsweise abgeschrägt und so zueinander angeordnet werden, dass sie einander zumindest bereichsweise überlappen. Dadurch können die eingangs beschriebenen Hinterschneidungen in Bewegungsrichtung des Laserstrahls erzeugt werden. Die überlappenden Bereiche werden beim Auftreten des Laserstrahls nacheinander aufgeschmolzen und miteinander verschweißt.

Bevorzugt werden durch das Abschrägen Schrägflächen gebildet und die Schrägflächen werden beim Aneinanderlegen der Kanten zumindest bereichsweise im Wesentlichen parallel zueinander angeordnet. Dadurch wird zusätzlich zu den Überlappungen ein möglichst großflächiger Kontakt zwischen den Kanten erzeugt, durch den die Schweißverbindung weiter verbessert wird.

Nach einer weiteren Ausführungsform der Erfindung werden die Hinterschneidungen durch ein Ineinandergreifen von sich wiederholenden Kantenabschnitten erzeugt. Insbesondere können dabei an den Kanten sich wiederholende Vorsprünge und Vertiefungen ausgebildet werden und die Kanten so aneinander gelegt werden, dass Vorsprünge der einen Kante in die Vertiefungen der anderen Kante eingreifen und umgekehrt. Es erfolgt somit eine Verzahnung der zu verbindenden Kanten entlang deren Längserstreckung, so dass ein sich entlang dieser Längserstreckung über die Kanten geführter Laserstrahl, auch bei evtl. vorhandenen Spalten zwischen den Kanten, zu keiner Zeit über einen größeren Bereich ausschließlich durch einen solchen Spalt, sondern die meiste Zeit über Material nahe den Kanten geführt wird. Dadurch ist gewährleistet, dass dieses Material bis zu den Kanten und zur gegenüberliegenden Kante aufgeschmolzen wird und eine zuverlässige Schweißverbindung erzeugt wird.

Gemäß der Erfindung wird die Kantengeometrie durch Umformung des Kantenmaterials erzeugt durch die Umformung an den Kanten werden verdickte Materialabschnitte erzeugt. Durch diese durch Umformung erreichten Materialverdickungen wird die Stabilität der Schweißverbindung zusätzlich erhöht und insbesondere wird einem so genannten Nahteinfall weiter vorgebeugt.

Nach einer weiteren bevorzugten Ausführungsform der Erfindung wird der Laserstrahl im Wesentlichen senkrecht oder zumindest in einer im Wesentlichen senkrechten Ebene zu den sich an die Kanten anschließenden Oberflächen der Gegenstände ausgerichtet. Die senkrechte Ebene ist dabei bevorzugt in Bewegungs- oder Vorschubrichtung des Laserstrahls ausgerichtet. Dadurch wird erreicht, dass beispielsweise bei überlappenden Schrägflächen an den Verbindungskanten der Laserstrahl nicht zwischen den Schrägflächen hindurchgeführt werden kann, ohne dass Material aufgeschmolzen wird. Insbesondere in Bewegungs- oder Vorschubrichtung kann der Laserstrahl schräg gegenüber der Oberfläche der Gegenstände gerichtet sein, während er quer zur Bewegungs- oder Vorschubrichtung vorteilhaft keine Neigung aufweist. Beispielsweise ist auch eine variable Führung des Laserstrahls über die Oberfläche der Gegenstände durch einen rotierenden Spiegel möglich.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: eine Draufsicht auf zwei miteinander zu verschweißende Materialstreifen mit geraden Verbindungskanten,
- Fig. 2: eine Draufsicht auf zwei zu verbindende Materialstreifen mit mäanderförmigen Verbindungskariten,
- Fig. 3: eine Draufsicht auf zwei zu verbindende Materialstreifen mit geschwungenen Verbindungskanten,
- Fig. 4: eine Detailansicht zweier aneinander liegender Verbindungskanten,
- Fig. 5: eine weitere Ansicht zweier Verbindungskanten,
- Fig. 6 bis 8: Detailansichten von Verbindungskanten mit ausgebildeten Kantengeometrien,
- Fig. 9: eine Draufsicht auf zwei zu verbindende Materialabschnitte mit Kantengeometrien,
- Fig. 10: eine Detailansicht aus Fig. 9,
- Fig. 11: eine weitere Kantengeometrie und
- Fig. 12: eine perspektivische Darstellung unterschiedlicher Neigungen des Laserstrahls.

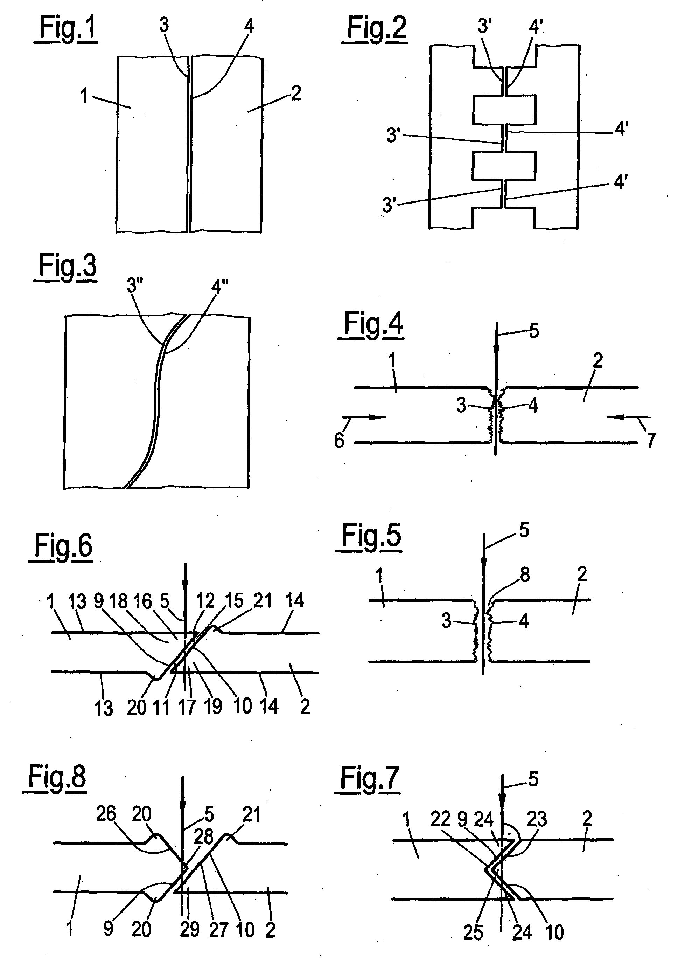

Fig. 1 zeigt zwei Materialstreifen 1, 2, beispielsweise Metallplatten, -bleche oder -profile, die zwei Kanten 3, 4 aufweisen, entlang derer die beiden Materialstreifen 1, 2 miteinander verschweißt werden sollen. Bei den dargestellten Materialstreifen 1, 2, kann es sich dabei um Ausschnitte von beliebig langen Materialstreifen handeln, die beispielsweise im Onlineverfahren miteinander verschweißt werden sollen. Grundsätzlich können die Materialstreifen 1, 2 auch beispielsweise Metallplatten oder sonstige kürzere Einheiten sein.

Die Materialstreifen 1, 2 sind so aneinander gelegt, dass die beiden Kanten 3, 4 im Wesentlichen aneinander anliegen, um ein Verschweißen mittels eines Laserstrahls 5 (siehe Fig. 4) zu ermöglichen. Der Laserstrahl 5 kann dabei entweder entlang der Kanten 3, 4 geführt werden, oder es ist auch möglich, dass die Materialstreifen 1, 2 gegenüber einem feststehenden Laserstrahl 5 bewegt werden.

Anstelle einer geradlinigen, durchgängigen Ausbildung der Kanten 3, 4 können diese auch unterbrochen ausgebildet sein, wie es in Fig. 4 anhand der Kanten 3', 4' dargestellt ist oder eine sonstige beliebige Form besitzen, beispielsweise eine geschwungene Form, wie sie anhand der Kanten 3", 4" gemäß Fig. 3 dargestellt ist. Das erfindungsgemäße Verfahren kann somit sowohl zur Erzeugung einer kontinuierlichen als auch einer intermittierenden Schweißnaht verwendet werden.

Um solche unterschiedlichen Kanten mittels eines Laserstrahlschweißverfahrens miteinander zu verschweißen, ist es erforderlich, dass die Kanten 3, 3', 3", 4, 4', 4" möglichst nahtlos aneinander anliegen. Besitzen die Kanten eine raue, unsaubere Oberflächenstruktur, wie es in der Detailansicht nach Fig. 4 für die Kanten 3, 4 dargestellt ist, so berühren sich die Kanten 3, 4 lediglich an wenigen Stellen punktuell, wie es aus Fig. 4 zu erkennen ist. Ein senkrecht auf die Verbindungsstelle zwischen den Kanten 3, 4 gerichteter Laserstrahl kann aufgrund seines geringen Durchmessers zwischen den Kanten 3, 4 hindurchtreten, ohne wesentliches Material der Materialstreifen 1, 2 zu schmelzen. Bei bekannten Laserstrahlschweißverfahren müssen daher die beiden Materialstreifen 1, 2 in Richtung von Pfeilen 6, 7 gegeneinander gedrückt werden, so dass die Kanten 3, 4 aneinander gepresst werden, um eine zuverlässige Schweißverbindung zu erzeugen.

Aufgrund von Unregelmäßigkeiten entlang der Längserstreckung der Kanten 3, 4 können sogar Bereiche entstehen, in denen die Kanten 3, 4 vollständig voneinander beabstandet sind, so dass zwischen diesen ein Spalt 8 entsteht, wie es in Fig. 5 dargestellt ist. In diesem Fall kann der Laserstrahl 5 durch den Spalt 8 hindurchtreten, ohne Kantenmaterial zu berühren und aufzuschmelzen.

Um dies zu vermeiden, wird erfindungsgemäß eine Nahtvorbereitung durchgeführt, indem Hinterschneidungen der miteinander zu verschweißenden Kanten erzeugt werden.

Fig. 6 zeigt eine Ausführungsform gemäß der Erfindung, bei der miteinander zu verschweißende Kanten 9, 10 durch Umformung abgeschrägt wurden, so dass Schrägflächen 11, 12 erzeugt wurden, die sowohl gegenüber Oberflächen 13, 14 des Materialstreifens 1, 2 als auch gegenüber dem Laserstrahl 5 schräg verlaufen. Die Schrägflächen 11, 12 sind dabei so angeordnet, dass sie im Wesentlichen parallel zueinander verlaufen und in Richtung des Laserstrahls 5 gegenseitige Hinterschneidungen 18, 19 bilden.

Wie es in Fig. 6 durch einen fortgeführten gestrichelten Verlauf des Laserstrahls 5 angedeutet ist, führt diese Hinterschneidung dazu, dass der Laserstrahl 5 trotz eines Abstands 15 zwischen den Schrägflächen 11, 12 nicht ohne Wirkung zwischen den Kanten 9, 10 hindurchtritt, sondern zunächst einen sich an die Kante 9 anschließenden Bereich 16 des Materialstreifens 1 aufschmilzt und anschließend einen in Strahlrichtung liegenden, sich an die Kante 10 anschließenden Bereich 17 des Materialstreifens 2 aufschmilzt. Die Bereiche 16, 17 bilden somit Hinterschneidungen 18, 19, die von dem Laserstrahl 5 geschmolzen werden und somit eine sichere Schweißverbindung der Materialstreifen 1 und 2 gewährleisten.

Wie aus Fig. 6 weiter zu erkennen ist, werden gemäß der Erfindung die Schrägflächen 11, 12 und damit die Hinterschneidungen 18, 19 durch Materialumformung, beispielsweise Schaben oder Drücken, gebildet, so dass an den Oberflächen 13, 14 entlang der Kanten 9, 10 Materialverdickungen 20, 21 entstehen. Beim Schmelzen des Materials im Bereich der Kanten 9, 10 werden auch die Materialverdickungen 20, 21 angeschmolzen, so dass aufgrund der erhöhten Materialstärke eine noch stabilere Schweißverbindung erzeugt wird.

In Fig. 7 ist dargestellt, dass die Hinterschneidungen 18, 19 auch durch V-förmige oder sonstige Einkerbungen 22 in einer der Kanten 9 und entsprechend komplementär ausgebildete Vorsprünge 23 an der jeweils anderen Kante 10 ausgebildet sein können. Auch in diesem Fall ergeben sich Hinterschneidungen 24, 25, die in Strahlrichtung des Laserstrahls 5 hintereinander liegend angeordnet sind. Somit wird auch bei einer solchen Kantengeometrie eine zuverlässige Schweißverbindung beim Laserstrahlschweißen erreicht.

Fig. 8 zeigt ein weiteresBeispiel, bei der eine Kante 9 als keilförmiger Vorsprung 26 und die andere Kante 10 als Schrägfläche 27 ausgebildet ist. Auch in diesem Ausführungsbeispiel sind wiederum Materialverdickungen 20, 21 entsprechend dem Ausführungsbeispiel nach Fig. 6 dargestellt. Entsprechende Materialverdickungen können selbstverständlich auch bei dem Ausführungsbeispiel nach Fig. 7 vorgesehen sein.

Auch bei dem Beispiel nach Fig. 8 sind in Strahlrichtung des Laserstrahls 5 gesehen Hinterschneidungen 28, 29 ausgebildet, die durch den Laserstrahl 5 zuverlässig geschmolzen werden und somit eine sichere Schweißverbindung gewährleisten.

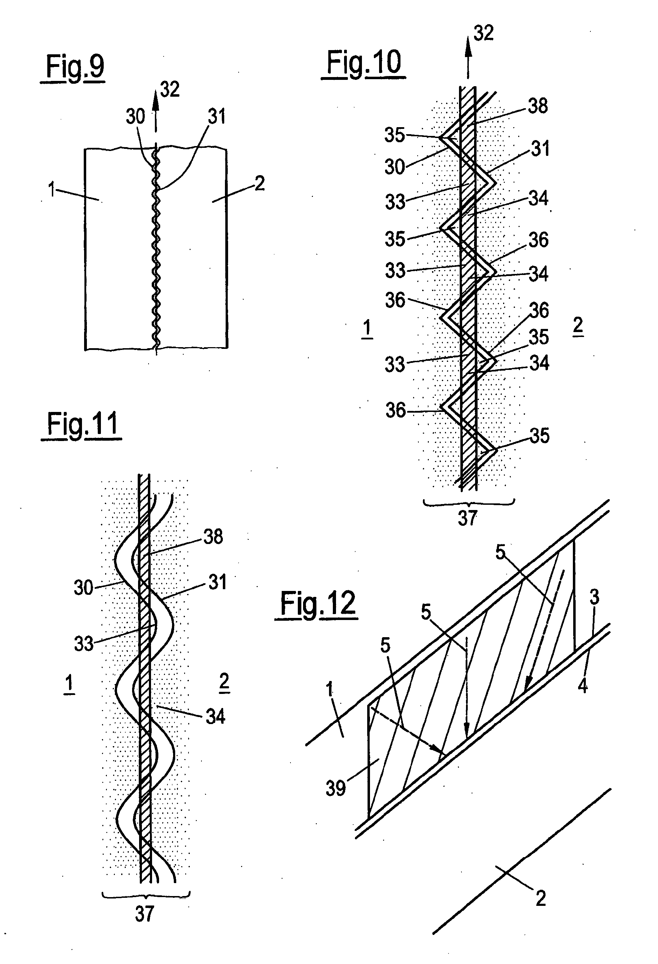

In der Draufsicht nach Fig. 9 ist zu erkennen, dass die miteinander zu verschweißenden Kanten 30, 31 auch in Längsrichtung der Schweißnaht und somit in Bewegungsrichtung des Laserstrahls 5 Hinterschneidungen 33, 34 bilden können. Dabei können sich die Materialstreifen 1, 2 in Richtung eines Pfeils 32 bewegen oder es kann der Laserstrahl 5 in Richtung des Pfeils 32 geführt werden. Die Hinterschneidungen 33, 34 sind dabei aus der Detailansicht in Fig. 10 deutlicher zu erkennen.

Aus Fig. 10 ist ersichtlich, dass die Kanten 30, 31 sägezahnförmig ausgebildet sind und somit sich wiederholende Vorsprünge 35 und Vertiefungen 36 besitzen. Die Kanten 30, 31 sind dabei so aneinander gelegt, dass die Vorsprünge 35 jeweils in Vertiefungen 36 eingreifen und somit eine Verzahnung der Kanten 30, 31 erfolgt.

Die Vorsprünge und Vertiefungen 35, 36 bilden in Bewegungsrichtung des Laserstrahls 5 gemäß dem Pfeil 32 die Hinterschneidungen 33, 34, wobei deren Breite quer zur Bewegungsrichtung gemäß dem Pfeil 32 so gewählt ist, dass beim Schweißvorgang das Material der aneinander liegenden Kanten 30, 31 im Wesentlichen vollständig angeschmolzen oder sogar vollständig geschmolzen wird.

Ein entsprechender Schmelzbereich 37 ist in Fig. 10 punktiert dargestellt, während der von dem Laserstrahl 5 überstrichene Bereich durch einen schraffiert dargestellten Streifen 38 gekennzeichnet ist.

Dadurch, dass die ineinander greifenden Kanten 30, 31 in Bewegungsrichtung des Laserstrahls 5 hintereinander liegende Hinterschneidungen 33, 34 bilden, ist gewährleistet, dass der Laserstrahl 5 an keiner Stelle über einen längeren Zeitraum zwischen den Kanten 30, 31 hindurchtreten kann, ohne Material aufzuschmelzen, so dass eine sichere Schweißverbindung gewährleistet ist.

Aus Fig. 11 ist zu erkennen, dass die Hinterschneidungen 33, 34 beispielsweise auch durch eine wellenförmige Ausgestaltung der Kanten 30, 31 erzeugt werden kann. Grundsätzlich ist jede Form geeignet, durch die in Richtung des Laserstrahls 5 oder in Bewegungsrichtung des Laserstrahls 5 Hinterschneidungen erzeugt werden.

Der Laserstrahl 5 wird bevorzugt senkrecht zu den sich an die Kanten 3, 4, 9, 10 anschließenden Oberflächen 13, 14 der Gegenstände ausgerichtet, wie es beispielweise aus den Fig. 6 bis 8 erkennbar ist. Aus Fig. 12 ist anhand von unterschiedlichen gestrichelten Darstellungen zu erkennen, dass der Laserstrahl 5 vorteilhaft auch in einer zu den Oberflächen 13, 14 senkrecht stehenden Ebene 39 ausgerichtet werden kann, wobei die Ebene 39 in Bewegungsrichtung des Laserstrahls 5 gemäß dem Pfeil 32 ausgerichtet ist. Vorteilhaft wird somit eine Schrägstellung des Laserstrahls 5 quer zu seiner Bewegungsrichtung vermieden.

### Bezugszeichenliste

- 1: Materialstreifen
- 2: Materialstreifen
- 3, 3', 3": Kante
- 4, 4', 4": Kante
- 5: Lasterstrahl
- 6: Pfeil
- 7: Pfeil
- 8: Spalt
- 9: Kante
- 10: Kante
- 11: Schrägfläche
- 12: Schrägfläche
- 13: Oberfläche
- 14: Oberfläche
- 15: Abstand
- 16: Bereich
- 17: Bereich
- 18: Hinterschneidung
- 19: Hinterschneidung
- 20: Materialverdickung
- 21: Materialverdickung
- 22: Einkerbungen
- 23: Vorsprünge
- 24: Hinterschneidung
- 25: Hinterschneidung
- 26: Vorsprung
- 27: Schrägfläche
- 28: Hinterschneidung
- 29: Hinterschneidung
- 30: Kante
- 31: Kante
- 32: Pfeil
- 33: Hinterschneidung
- 34: Hinterschneidung
- 35: Vorsprünge
- 36: Vertiefungen
- 37: Schmelzbereich
- 38: vom Laserstrahl überstrichener Bereich

## Patentansprüche

1. Verfahren zum Verschweißen von Gegenständen (1, 2), insbesondere von Metallplatten, -blechen oder -profilen, bei dem zumindest zwei Kanten (9, 10) der Gegenstände (1, 2) aneinander gelegt und die aneinander liegenden Kanten (9, 10) durch einen Laserstrahl (5) miteinander verschweißt werden, wobei eine Kantengeometrie derart erzeugt wird, dass während des Schweißvorgangs die aneinander liegenden Kanten (9, 10) in Richtung des Laserstrahls (5) und/oder in Bewegungsrichtung des Laserstrahls (5) gegenseitige Hinterschneidungen (18, 19) bilden,
**dadurch gekennzeichnet,**
**dass** die Kantengeometrie durch Umformung des Kantenmaterials erzeugt wird, dass durch die Umformung an den Kanten (9, 10) verdickte Materialabschnitte (20, 21) erzeugt werden, wobei die verdickten Materialabschnitte (20, 21) jeweils nur an einer von zwei gegenüberliegenden Oberflächen (13, 14) der miteinander zu verschweißenden Gegenstände (1, 2) erzeugt werden, und dass die derart vorbereiteten Kanten (9, 10) der Gegenstände (1, 2) so aneinander gelegt werden, dass sich jeweils die Oberfläche (13, 14) mit verdicktem Materialabschnitt (20, 21) des einen Gegenstandes (1, 2) an diejenige Oberfläche (13, 14) des anderen Gegenstandes (1, 2) anschließt, die der Oberfläche (13, 14) mit verdickten Materialabschnitt (20, 21) dieses anderen Gegenstands (1, 2) gegenüberliegt.

2. Verfahren nach Anspruch 1,
**dadurch gekennzeichnet,**
**dass** die Größe der Hinterschneidungen (18, 19) so gewählt wird, dass beim Schweißvorgang das Material der aneinander liegenden Kanten (9, 10) im Wesentlichen über den gesamten aneinander liegenden Bereich zumindest angeschmolzen oder vollständig geschmolzen wird.

3. Verfahren nach Anspruch 1 oder 2,
**dadurch gekennzeichnet,**
**dass** die Kanten (9, 10) ohne wesentlichen Druck aneinander gelegt werden.

4. Verfahren nach einem der vorhergehenden Ansprüche,
**dadurch gekennzeichnet,**
**dass** die Hinterschneidungen (18, 19) erzeugt werden, indem die Kanten (9, 10) zumindest bereichsweise abgeschrägt und so zueinander angeordnet werden, dass sie einander zumindest bereichsweise überlappen.

5. Verfahren nach Anspruch 4,
**dadurch gekennzeichnet,**
**dass** durch das Abschrägen Schrägflächen (11, 12) gebildet werden und dass die Schrägflächen (11, 12) beim Aneinanderlegen der Kanten (9, 10) zumindest bereichsweise im Wesentlichen parallel zueinander angeordnet werden.

6. Verfahren nach einem der vorhergehenden Ansprüche,
**dadurch gekennzeichnet,**
**dass** die Hinterschneidungen (18, 19) durch ein Ineinandergreifen von sich wiederholenden Kantenabschnitten erzeugt werden.

7. Verfahren nach einem der vorhergehenden Ansprüche,
**dadurch gekennzeichnet,**
**dass** an den Kanten (9, 10) sich wiederholende Vorsprünge und Vertiefungen ausgebildet werden und dass die Kanten (9, 10) so aneinander gelegt werden, dass Vorsprünge der einen Kante (9, 10) in Vertiefungen der anderen Kante (9, 10) eingreifen und umgekehrt.

8. Verfahren nach einem der vorhergehenden Ansprüche,
**dadurch gekennzeichnet,**
**dass** der Laserstrahl (5) im Wesentlichen senkrecht oder zumindest in einer im Wesentlichen senkrechten Ebene zu den sich an die Kanten (9, 10) anschließenden Oberflächen (13, 14) der Gegenstände ausgerichtet wird, wobei die senkrechte Ebene bevorzugt in Bewegungs- oder Vorschubrichtung des Laserstrahls ausgerichtet ist.

## Claims

1. A method of welding objects (1, 2), in particular metal plates, sheet metal parts or metal sections, in which method at least two edges (9, 10) of the objects (1, 2) are laid next to one another and the mutually contacting edges (9, 10) are welded to one another by means of a laser beam (5), with an edge geometry being produced in such a way that the mutually contacting edges (9, 10) form mutual undercuts (18, 19) in the direction of the laser beam (5) and/or in the direction of movement of the laser beam (5) during the welding process,
**characterized in that**
the edge geometry is produced by means of a shaping of the edge material, **in that** thickened material sections (20, 21) are produced at the edges (9, 10) by means of the shaping, with the thickened material sections (20, 21) in each case only being produced at one of two oppositely disposed surfaces (13, 14) of the objects (1, 2) to be welded to one another, and **in that** the edges (9, 10) of the objects (1, 2) prepared in such a way are laid next to one another such that the respective surface (13, 14) with the thickened material section (20, 21) of the one object (1, 2) adjoins that surface (13, 14) of the other object (1, 2), which is disposed opposite the surface (13, 14) with the thickened material section (20, 21) of this other object (1, 2).

2. A method in accordance with claim 1,
**characterised in that**
the size of the undercuts (18, 19) are selected such that, during the welding process, the material of the mutually contacting edges (9, 10) substantially has at least started to melt or has melted completely over the complete mutually contacting region.

3. A method in accordance with claim 1 or claim 2,
**characterized in that**
the edges (9, 10) are laid next to one another without a substantial pressure.

4. A method in accordance with any one of the preceding claims,
**characterized in that**
the undercuts (18, 19) are produced **in that** the edges (9, 10) are chamfered at least regionally and are arranged with respect to one another such that they overlap one another at least regionally.

5. A method in accordance with claim 4,
**characterized in that**
inclined surfaces (11, 12) are formed through the chamfering and **in that**, on a placing next to one another of the edges (9, 10), the inclined surfaces (11, 12) are at least regionally arranged substantially in parallel with respect to one another.

6. A method in accordance with any one of the preceding claims,
**characterized in that**
the undercuts (18, 19) are produced though an engaging into one another of repeating edge sections.

7. A method in accordance with any one of the preceding claims,
**characterized in that**
repeating projections and repeating recesses are formed at the edges (9, 10) and **in that** the edges (9, 10) are laid next to one another such that projections of the one edge (9, 10) engage into recesses of the other edge (9, 10) and vice versa.

8. A method in accordance with any one of the preceding claims,
**characterized in that**
the laser beam (5) is substantially aligned perpendicular to the surfaces (13, 14) of the objects adjoining the edges (9, 10) or are at least aligned in a plane substantially perpendicular thereto, with the perpendicular plane preferably being aligned in the direction of movement or in the direction of advancement of the laser beam.

## Revendications

1. Procédé pour le soudage d'objets (1, 2), en particulier de plaques, de tôles ou de profilés en métal, dans lequel au moins deux arêtes (9, 10) des objets (1, 2) sont disposées l'une contre l'autre, et les arêtes (9, 10) disposées l'une contre l'autre sont soudées l'une à l'autre par un rayon laser (5), dans lequel on engendre une géométrie des arêtes telle que pendant l'opération de soudure les arêtes (9, 10) disposées l'une contre l'autre forment des contre-dépouilles (18, 19) opposées en direction du rayon laser (5) et/ou dans la direction de déplacement du rayon laser (5),
**caractérisé en ce que**
la géométrie des arêtes est engendrée par déformation du matériau des arêtes, **en ce que** l'on engendre des portions de matériau épaissies (20, 21) en raison de la déformation au niveau des arêtes (9, 10), dans lequel les portions de matériau épaissies (20, 21) sont engendrées respectivement seulement sur une parmi deux surfaces mutuellement opposées (13, 14) des objets (1, 2) à souder l'un à l'autre, et **en ce que** les arêtes ainsi préparées (9, 10) des objets (1, 2) sont disposées l'une contre l'autre de telle façon que la surface (13, 14) présentant respectivement une portion de matériau épaissie (20, 21) de l'un des objets (1, 2) se raccorde à la surface (13, 14) de l'autre objet (1, 2) qui est à l'opposé de la surface (13, 14) avec une portion de matériau épaissie (20, 21) de cet autre objet (1, 2).

2. Procédé selon la revendication 1,
**caractérisé en ce que** la taille des contre-dépouilles (18, 19) est ainsi choisie que lors de l'opération de soudage le matériau des arêtes disposées l'une contre l'autre (9, 10) est au moins ramolli ou entièrement amené en fusion sensiblement sur la totalité de la zone où elles sont disposées l'une contre l'autre.

3. Procédé selon la revendication 1 ou 2,
**caractérisé en ce que** les arêtes (9, 10) sont disposées l'une contre l'autre sensiblement sans pression.

4. Procédé selon l'une des revendications précédentes,
**caractérisé en ce que** les contre-dépouilles (18, 19) sont engendrées en biseautant au moins localement les arêtes (9, 10), et en les agençant l'une par rapport à l'autre de telle façon qu'elles se chevauchent mutuellement au moins localement.

5. Procédé selon la revendication 4,
**caractérisé en ce que** l'on forme par le biseautage des surfaces obliques (11, 12), et **en ce que** les surfaces obliques (11, 12) sont agencées au moins localement sensiblement parallèlement les unes aux autres lorsque l'on dispose les arêtes (9, 10) l'une contre l'autre.

6. Procédé selon l'une des revendications précédentes,
**caractérisé en ce que** les contre-dépouilles (18, 19) sont engendrées par un engagement réciproque de tronçons d'arête qui se répètent.

7. Procédé selon l'une des revendications précédentes,
**caractérisé en ce que** l'on forme sur les arêtes (9, 10) des saillies et des renfoncements qui se répètent, et **en ce que** les arêtes (9, 10) sont disposées l'une contre l'autre de telle façon que les saillies d'une arête (9, 10) s'engagent dans les renfoncements de l'autre arête (9, 10) et inversement.

8. Procédé selon l'une des revendications précédentes,
**caractérisé en ce que** le rayon laser (5) est dirigé sensiblement perpendiculairement ou au moins dans un plan sensiblement perpendiculaire aux surfaces (13, 14) de l'objet qui se raccordent aux arêtes, et dans lequel le plan perpendiculaire est orienté de préférence dans la direction de déplacement ou d'avance du rayon laser.
